# EUROPÄISCHE PATENTSCHRIFT

(11) **EP 1 127 732 B1**
(45) Veröffentlichungstag und Bekanntmachung des Hinweises auf die Patenterteilung: **05.09.2007**
(21) Anmeldenummer: 01100907.3
(22) Anmeldetag: 16.01.2001
(51) Int. Cl.: B60L 11/12

(54) **Antriebsvorrichtung für ein kraftstoffelektrisch angetriebenes Fahrzeug**
Drive apparatus for a hybrid fuel electric vehicle
Entraînement pour véhicule hybride propulsé par combustible ou électricité

(30) Priorität: 24.01.2000 DE 20001113 U
(43) Veröffentlichungstag der Anmeldung: 29.08.2001
(73) Patentinhaber: SIEMENS AKTIENGESELLSCHAFT, 80333 München (DE)
(72) Erfinder: Haas, Gerald, 91056 Erlangen (DE); Lang, Heinrich, 91074 Herzogenaurach (DE); Tax, Hans, 80802 München (DE); Wichner, Wolfgang, 90530 Wendelstein (DE)

(56) Entgegenhaltungen:
- EP-A- 0 543 390
- EP-A- 0 769 402
- US-A- 5 545 928
- US-A- 5 632 352
- US-A- 5 924 505
- US-A- 5 954 779
- PATENT ABSTRACTS OF JAPAN vol. 1996, no. 05, 31. Mai 1996 (1996-05-31) & JP 08 019111 A (MITSUBISHI HEAVY IND LTD), 19. Januar 1996 (1996-01-19)
- PATENT ABSTRACTS OF JAPAN vol. 010, no. 029 (M-451), 5. Februar 1986 (1986-02-05) & JP 60 187202 A (FUJI DENKI SEIZO KK), 24. September 1985 (1985-09-24)

## Beschreibung

Die Erfindung bezieht sich auf eine Antriebsvorrichtung für ein kraftstoffelektrisch angetriebenes Fahrzeug, mit einer Brennkraftmaschine, einem Generator, der mittels der Brennkraftmaschine antreibbar ist, einem Gleichrichter, an den die Ausgangsspannung des Generators abgebbar ist, einer Gleichspannungsschiene, die vom Gleichrichter mit einer Zwischenkreisspannung speisbar ist, Wechselrichtern, die an die Gleichspannungsschiene angeschlossen sind, Abnehmermotoren, die drehzahl- und/oder drehmomentgeregelt betreibbar und jeweils mittels eines Wechselrichters speisbar sind, und einer Steuer- und Regelvorrichtung, mittels der Fahrzeugfunktionen steuer- bzw. regelbar sind.

Bei herkömmlichen derartigen Antriebsvorrichtungen laufen die Brennkraftmaschine, die üblicherweise als Dieselmotor ausgebildet, und mit dieser bzw. diesem der Generator, der üblicherweise als Drehstromsynchrongenerator ausgebildet ist, immer mit der gleichen Drehzahl, unabhängig davon, welche Lastanforderungen an die Abnehmermotoren gestellt werden. Entsprechend liefert der Drehstromsynchrongenerator hierbei auch immer die gleiche Ausgangsspannung an den Gleichrichter, wodurch auf der Gleichspannungsschiene immer in etwa die gleiche Zwischenkreisspannung herrscht.

Nachteilig bei dieser aus dem Stand der Technik bekannten herkömmlichen Antriebsvorrichtung ist, dass in Schwachlastphasen, speziell bei häufig vorkommenden Stillstandszeiten des Fahrzeugs bei laufendem Fahrzeugmotor, der Dieselmotor bzw. die Brennkraftmaschine weiterhin seine bzw. ihre hohe Drehzahl behält, wobei jedoch kaum Drehmoment abgegeben wird. Hierdurch ergibt sich ein unerwünscht hoher Diesel- bzw. Kraftstoffverbrauch, wobei darüber hinaus ein nicht nötiger Verschleiß der Brennkraftmaschine bzw. des Dieselmotors auftritt. Darüber hinaus ergeben sich aus diesem an sich unnötigen Betrieb des Dieselmotors bzw. der Brennkraftmaschine unerwünschte Belästigungen, z.B. Lärmentwicklungen und Abgasbelastungen.

EP-A-0769402 offenbart eine Antriebsvorrichtung für ein kraftstoffelektrisch angetriebenes Fahrzeug, bei der eine Regelvorrichtung an Lastmesszellen angeschlossen ist, mittels denen das Gewicht des Fahrzeugs erfassbar ist.

US-A-5954779 zeigt ein Verfahren zum Bremsen bei dieselelektrischer Kopplung, bei dem man einen Generator motorisch werden lässt und so eine Brennkraftmaschine antreibt, so dass die innere Reibung ansteigt. JP(A) 60187202 offenbart einen Bremschopper.

In JP(A) 08019111 wird eine Antriebsvorrichtung mit einer Brennkraftmaschine und einem Kontrollcomputer beschrieben. Der Kontrollcomputer steuert über einen Feldstromregulator den Feldstrom eines Generators in Abhängigkeit der Drehzahl der Brennkraftmaschine.

US-B-5 545 928 offenbart eine Antriebsvorrichtung gemäß dem Oberbegriff des Anspruchs 1.

Der Erfindung liegt die Aufgabe zugrunde, die eingangs geschilderte gattungsgemäße Antriebsvorrichtung für ein elektrisch angetriebenes Fahrzeug derart weiterzubilden, dass ohne wirtschaftlich aufwendige Spezialmotoren, wie z.B. Notstromdieselmotoren, mittels einer Anpassung des Betriebs der Antriebsvorrichtung an den von den Abnehmermotoren nachgefragten Leistungsbedarf ein intelligentes Energiemanagement erzielt werden kann.

Diese Aufgabe wird erfindungsgemäß durch die Merkmale des Anspruchs 1 gelöst.

Zweckmäßigerweise sind die von der gemeinsamen Gleichspannungsschiene gespeisten Wechselrichter als Pulswechselrichter ausgebildet, wodurch die Fähigkeit der modernen, an die Gleichspannungsschiene angeschlossenen Pulswechselrichter ausgenutzt werden kann, mit einer in einem weiteren Bereich variablen Zwischenkreisspannung zu arbeiten.

Um ein unnötig häufiges Beschleunigen und Verzögern der Brennkraftmaschine bei an den Abnehmermotoren anfallenden Lastwechseln zu vermeiden, ist es vorteilhaft, wenn zwischen der Brennkraftmaschine und der Drehzahlregeleinheit der Steuer- und Regelvorrichtung ein Zeitverzögerungsglied angeordnet ist, mittels dem ein Absenken der Drehzahl der Brennkraftmaschine bei einem Abfall der nachgefragten Last um einen vorgebbaren Zeitraum verzögerbar ist.

Vorteilhaft ist im Falle der erfindungsgemäßen Antriebsvorrichtung die Drehzahlregeleinheit der Steuer- und Regelvorrichtung so ausgebildet, dass die Drehzahl der Brennkraftmaschine bei Schwachlast auf deren Leerlaufdrehzahl absenkbar ist.

Als Brennkraftmaschine kann im Falle der erfindungsgemäßen Antriebsvorrichtung vorteilhaft ein Dieselmotor zum Einsatz kommen.

Der Generator der erfindungsgemäßen Antriebsvorrichtung kann zweckmäßigerweise als Synchrongenerator, vorzugsweise als Drehstromsynchrongenerator ausgebildet sein.

Um den Abfluss überschüssiger Energie in dem Fall sicherzustellen, dass die an die Gleichspannungsschiene angeschlossenen Abnehmermotoren auf die Gleichspannungsschiene zurückspeisen, ist es zweckmäßig, wenn an die Gleichspannungsschiene eine Bremseinheit mit daran angeschlossenen Widerständen angeschlossen ist. Hierdurch kann die in dem genannten Zustand anfallende überschüssige Energie verheizt werden.

Vorteilhaft kann die erfindungsgemäße Antriebsvorrichtung bei einem Containertransportfahrzeug zum Einsatz kommen, wobei dann vier Abnehmermotoren als Fahrwerksmotoren eines Fahrwerks und zwei Abnehmermotoren als Hubwerksmotoren eines Hubwerks dieses Containertransportfahrzeugs ausgebildet sein können.
Gemäß einer vorteilhaften Ausführungsform der erfindungsgemäßen Antriebsvorrichtung ist deren Steuer- und Regelvorrichtung an abnehmermotorseitige Leistungsanforderungselemente angeschlossen, so dass auf eine entsprechende Leistungsanforderung unmittelbar eine Anpassung der Drehzahl der Brennkraftmaschine und damit der in der Gleichspannungsschiene zur Verfügung gestellten Zwischenkreisspannung erfolgen kann.

Ein solches abnehmermotorseitiges Leistungsanforderungselement kann beispielsweise als Gaspedalführer der Fahrwerksmotoren oder als Hubwerksmeisterschalter der Hubwerksmotoren ausgebildet sein.

Darüber hinaus ist es zweckmäßig, wenn die Steuer- und Regelvorrichtung der erfindungsgemäßen Antriebsvorrichtung an Lastmesszellen angeschlossen ist, mittels denen das Gewicht einer am Hubwerk aufgenommenen Ladung erfassbar ist, da die den Hubwerksmotoren zur Verfügung zu stellende elektrische Leistung u.a. von dem dort anliegenden Gewicht abhängig ist.

Des weiteren kann ein Abnehmermotor als Hilfsbetriebsmotor des kraftstoff- bzw. dieselelektrisch angetriebenen Fahrzeugs ausgebildet und über einen Sinusfilter von dem ihm zugeordneten Wechselrichter speisbar sein.

Zweckmäßigerweise sind sämtliche Wechselrichter der Antriebsvorrichtung mittels eines gemeinsamen Steuerbusses an die Steuer- und Regelvorrichtung der Antriebsvorrichtung angeschlossen.

Beispielsweise beim Einsatz der erfindungsgemäßen Antriebsvorrichtung im Zusammenhang mit einem Containertransportfahrzeug ist es zweckmäßig, wenn die Zwischenkreisspannung der Gleichspannungsschiene in einem zulässigen Arbeitsbereich zwischen 460 und 750 V variabel ist.

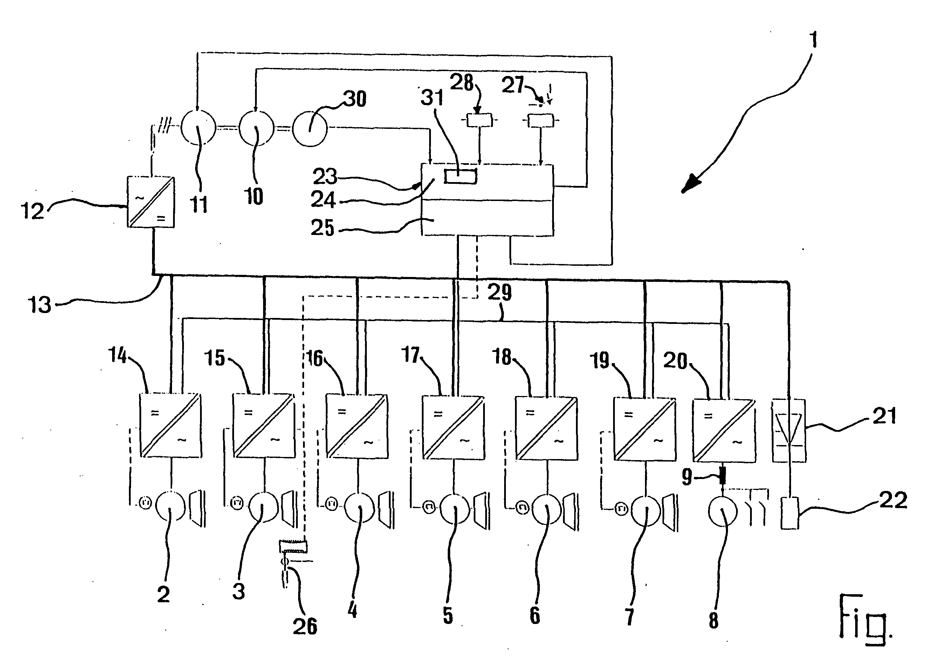

Im folgenden wird die Erfindung an Hand einer Ausführungsform unter Bezugnahme auf die Zeichnung näher erläutert, in deren einziger Figur konzeptionell ein Ausführungsbeispiel einer erfindungsgemäßen Antriebsvorrichtung für ein dieselelektrisch angetriebenes Fahrzeug an Hand eines Containertransportfahrzeuges bzw. Straddle Carriers mit frequenzumrichtergespeisten Drehstromantrieben dargestellt ist.

Eine in der Figur hinsichtlich ihrer grundsätzlichen Konzeption dargestellte Ausführungsform einer erfindungsgemäßen Antriebsvorrichtung 1 kommt bei einem dieselelektrisch angetriebenen Fahrzeug, z.B. bei einem Containertransportfahrzeug bzw. einem Straddle Carrier, mit frequenzumrichtergespeisten Drehstromantrieben zum Einsatz.

Zu dem Containertransportfahrzeug gehört ein Hubwerk und ein Fahrwerk, die mittels der Antriebsvorrichtung angetrieben werden.

Das Hubwerk hat zwei Hubwerksmotoren 2, 3, mittels denen eine Last in Form eines Containers oder dergleichen in Vertikalrichtung auf- und abwärts bewegbar ist.

Zum Fahrwerk des Containertransportfahrzeuges gehören vier Fahrwerksmotoren 4, 5, 6, 7. Darüber hinaus hat das Containertransportfahrzeug einen Hilfsbetriebsmotor 8, der über einen Sinusfilter 9 an einen Abnehmer bzw. Verbraucher angeschlossen ist.

Die Hubwerksmotoren 2, 3, die Fahrwerksmotoren 4, 5, 6, 7 und der Hilfsbetriebsmotor 8 werden drehzahl- und/oder drehmomentgeregelt betrieben.

Die zum Betrieb der vorstehend erwähnten Abnehmermotoren 2 bis 8 erforderliche Antriebsenergie, die von der Antriebsvorrichtung 1 auf die genannten Motoren 2 bis 8 verteilt bzw. an diese weitergeleitet wird, wird mittels eines Dieselmotors 10 erzeugt.

Die vom Dieselmotor 10 abgegebene mechanische Antriebsenergie wird durch einen Drehstromsynchrongenerator 11 in elektrische Energie umgewandelt, wobei die Ausgangsspannung des Drehstromsynchrongenerators 11 einem Gleichrichter 12 als Eingangsspannung eingegeben wird.

Aus dem Gleichrichter 12 wird eine Gleichspannungsschiene 13 mit einer Zwischenkreisspannung, die von der Eingangsspannung des Gleichrichters 12 bzw. der Ausgangsspannung des Drehstromsynchrongenerators 11 abhängt, gespeist. Aus dieser Gleichspannungsschiene 13 beziehen sieben Pulswechselrichter 14, 15, 16, 17, 18, 19, 20 ihre elektrische Energie, die für den Betrieb der Hubwerksmotoren 2, 3, der Fahrwerksmotoren 4, 5, 6, 7 und des Hilfsbetriebsmotors 8 erforderlich ist, wobei jeweils ein Pulswechselrichter 14 bis 20 einem Abnehmermotor 2 bis 8 zugeordnet ist.

Die Pulswechselrichter 14 bis 20 können mit einer in einem weiteren Bereich variablen Zwischenkreisspannung arbeiten, so daß die in der Gleichspannungsschiene 13, die allen Pulswechselrichtern 14 bis 20 gemeinsam ist, herrschende Zwischenkreisspannung, z.B. zwischen 460 und 750 V, variieren kann.

Des weiteren ist an die allen Pulswechselrichtern 14 bis 20 gemeinsame Gleichspannungsschiene 13 eine Bremseinheit 21 angeschlossen. Die Bremseinheit 21 kann beispielsweise in Form eines Bremschoppers vorliegen und daran angeschlossene Widerstände 22 aufweisen. Mittels der Bremseinheit 21 kann überschüssige elektrische Energie verheizt werden, die in dem Fall auftritt, dass die von den Abnehmermotoren 2 bis 8 in die Gleichspannungsschiene 13 eingespeiste elektrische Energie die von den Abnehmermotoren 2 bis 8 verbrauchte elektrische Energie übersteigt.

Alle Funktionen des Containertransportfahrzeugs werden von einer Steuer- und Regelvorrichtung 23 gesteuert bzw. geregelt. Zur Steuer- und Regelvorrichtung 23 gehört eine Drehzahlregeleinheit 24, mittels der die Drehzahl des Dieselmotors 10 regelbar ist. Ein Drehzahlmessgeber 30 liefert der Drehzahlregeleinheit hierfür den Drehzahlistwert. Im Falle der erfindungsgemäßen Antriebsvorrichtung wird beispielsweise die Drehzahl des Dieselmotors 10 bei Schwachlastzuständen auf die Leerlaufdrehzahl abgesenkt. Um zu verhindern, dass die in der Gleichspannungsschiene 13 herrschende Zwischenkreisspannung eine zulässige Untergrenze unterschreitet, wird die Erregung des Drehstromsynchrongenerators 11 variiert. Hierzu dient eine Ausgangsspannungsregeleinheit 25 der Steuer- und Regelvorrichtung 23, mittels der die Ausgangsspannung des Drehstromsynchrongenerators 11 so geregelt wird, dass die in der Gleichspannungsschiene 13 herrschende Zwischenkreisspannung jederzeit innerhalb eines erlaubten Arbeitsbereichs verbleibt.

An die Steuer- und Regelvorrichtung 23 des Containertransportfahrzeugs sind Lastmesszellen 26, mittels denen an den Hubwerksmotoren 2, 3 anliegende Gewichtslasten oder dergleichen ermittelbar sind, ein Gaspedalfühler 27, mittels dem an einem Gaspedal der Fahrwerksmotoren 4, 5, 6, 7 angeforderte Lasten erfassbar sind, und ein Hubwerksmeisterschalter 28 angeschlossen, mittels dem die Hubwerksmotoren 2, 3 in Betrieb setzbar sind.

Sofern der Gaspedalfühler 27 und/oder der Hubwerksmeisterschalter 28 ein Signal an die Steuer- und Regelvorrichtung 23 des Containertransportfahrzeugs anlegen, aus dem hervorgeht, dass wieder eine größere elektrische Leistung benötigt wird, erfolgt mittels der Drehzahlregeleinheit 24 der Steuer- und Regelvorrichtung 23 unmittelbar eine Erhöhung der Drehzahl des Dieselmotors, so dass letzterer wieder hohe Antriebsleistungen abgeben kann.

Die Steuer- und Regelvorrichtung 23 ist über einen Steuerbus 29 mit sämtlichen Pulswechselrichtern 14 bis 20 verbunden und erhält so unter anderem die Information über die aktuell herrschende Zwischenkreisspannung.

Die Leistungsabgabe an die Abnehmermotoren 2 bis 8 wird durch die Steuer- und Regelvorrichtung 23 freigegeben, sobald die Drehzahl des Dieselmotors 10 mittels der Drehzahlregeleinheit 24 in der gewünschten Weise erhöht worden ist.

Sobald der Zustand eines erhöhten Abgabeleistungsbedarfs nicht mehr vorliegt, wird die Drehzahl des Dieselmotors 10 mittels der Drehzahlregeleinheit 24 der Steuer- und Regelvorrichtung 23 wieder abgesenkt, wobei zwischen der Einleitung der Absenkung und der Beendigung des Zustands der erhöhten Leistungsabfrage mittels eines Zeitverzögerungsglieds 31 ein vorgebbarer Zeitraum eingehalten wird. Diese Zeitverzögerung bzw. dieser vorgebbare Zeitraum dient dazu, ein unnötig häufiges Beschleunigen und Verzögern des Dieselmotors 10 bei Lastwechseln zu vermeiden.

Mit der erfindungsgemäßen Antriebsvorrichtung 1 kann die Steuerung der Drehzahl des Dieselmotors 10 in Abhängigkeit vom an den Abnehmermotoren 2 bis 8 nachgefragten Leistungsbedarf erfolgen, wobei die Fähigkeit der von der Gleichspannungsschiene 13 gespeisten modernen Pulswechselrichter 14 bis 20 ausgenutzt wird, mit einer in einem weiten Bereich variablen Zwischenkreisspannung zu arbeiten. Mittels der Ausgangsspannungsregeleinheit 25 kann die Ausgangsspannung des Drehstromsynchrongenerators 11 so geregelt werden, dass die maximal und minimal in der Gleichspannungsschiene 13 erlaubte Zwischenkreisspannung nicht über- bzw. unterschritten wird. Insgesamt ergibt sich so aufgrund der entsprechend dem aktuell nachgefragten Leistungsbedarf variablen Drehzahl des Dieselmotors 10 ein intelligentes Energiemanagement der Antriebsvorrichtung 1.

## Patentansprüche

1. Antriebsvorrichtung für ein kraftstoffelektrisch angetriebenes Fahrzeug, mit einer Brennkraftmaschine (10), einem Generator (11), der mittels der Brennkraftmaschine (10) antreibbar ist, einem Gleichrichter (12), an den die Ausgangsspannung des Generators (11) abgebbar ist, einer Gleichspannungsschiene (13), die vom Gleichrichter (12) mit einer Zwischenkreisspannung speisbar ist, und einer Steuer- und Regelvorrichtung (23), mittels der Fahrzeugfunktionen steuer- bzw. regelbar sind, wobei die Steuer- und Regelvorrichtung (23) eine Drehzahlregeleinheit (24) mit einem Drehzahlmessgeber (30), mittels der die Drehzahl der Brennkraftmaschine (10) entsprechend dem Leistungsbedarf regelbar ist, aufweist, **dadurch gekennzeichnet, dass** an die Gleichspannungsschiene (13) mehrere Wechselrichter (14, 15, 16, 17, 18, 19, 20) angeschlossen sind, mittels denen jeweils ein drehzahl- und /oder drehmomentgeregelt betreibbarer Abnehmermotor (2, 3, 4, 5, 6, 7, 8) speisbar ist, und dass die Steuer- und Regelvorrichtung (23) eine Ausgangsspannungsregeleinheit (25) aufweist, mittels der die Erregung des Generators (11) so regelbar ist, dass die Zwischenkreisspannung auf der Gleichspannungsschiene (13) in einem vorgebbaren zulässigen Bereich haltbar ist.

2. Antriebsvorrichtung nach Anspruch 1, bei der die von der gemeinsamen Gleichspannungsschiene (13) gespeisten Wechselrichter als Pulswechselrichter (14,15,16,17,18,19,20) ausgebildet sind.

3. Antriebsvorrichtung nach Anspruch 1 oder 2, bei der zwischen der Brennkraftmaschine (10) und der Drehzahlregeleinheit (24) der Steuer- und Regelvorrichtung (23) ein Zeitverzögerungsglied (31) angeordnet ist, mittels dem ein Absenken der Drehzahl der Brennkraftmaschine (10) bei einem Abfall der nachgefragten Last um einen vorgebbaren Zeitraum verzögerbar ist.

4. Antriebsvorrichtung nach einem der Ansprüche 1 bis 3, bei der die Drehzahlregeleinheit (24) der Steuer- und Regelvorrichtung (23) so ausgebildet ist, dass die Drehzahl der Brennkraftmaschine (10) bei Schwachlast auf deren Leerlaufdrehzahl absenkbar ist.

5. Antriebsvorrichtung nach einem der Ansprüche 1 bis 4, bei der die Brennkraftmaschine als Dieselmotor (10) ausgebildet ist.

6. Antriebsvorrichtung nach einem der Ansprüche 1 bis 5, bei der der Generator als Synchrongenerator (11) ausgebildet ist.

7. Antriebsvorrichtung nach einem der Ansprüche 1 bis 6, bei der der Generator als Drehstromsynchrongenerator (11) ausgebildet ist.

8. Antriebsvorrichtung nach einem der Ansprüche 1 bis 7, bei der an die Gleichspannungsschiene (13) eine Bremseinheit (21) mit daran angeschlossenen Widerständen (22) angeschlossen ist.

9. Antriebsvorrichtung nach einem der Ansprüche 1 bis 8, bei der vier Abnehmermotoren als Fahrwerksmotoren (4,5,6,7) eines Fahrwerks und zwei Abnehmermotoren als Hubwerksmotoren (2,3) eines Hubwerks des als Containertransportfahrzeug ausgebildeten kraftstoffelektrisch angetriebenen Fahrzeugs ausgebildet sind.

10. Antriebsvorrichtung nach einem der Ansprüche 1 bis 9, bei der die Steuer- und Regelvorrichtung (23) an abnehmermotorseitige Leistungsanforderungselemente (27,28) angeschlossen ist.

11. Antriebsvorrichtung nach Anspruch 10, bei der ein abnehmermotorseitiges Leistungsanforderungselement als Gaspedalfühler (27) der Fahrwerksmotoren (4,5,6,7) ausgebildet ist.

12. Antriebsvorrichtung nach Anspruch 10 oder 11, bei der ein abnehmermotorseitiges Leistungsanforderungselement als Hubwerksmeisterschalter (28) der Hubwerksmotoren (2,3) ausgebildet ist.

13. Antriebsvorrichtung nach einem der Ansprüche 9 bis 12, bei der die Steuer- und Regelvorrichtung (23) an Lastmesszellen (26) angeschlossen ist, mittels denen das Gewicht einer am Hubwerk aufgenommenen Ladung erfassbar ist.

14. Antriebsvorrichtung nach einem der Ansprüche 1 bis 13, bei der ein Abnehmermotor als Hilfsbetriebsmotor (8) ausgebildet und über einen Sinusfilter (9) von dem ihm zugeordneten Wechselrichter (20) speisbar ist.

15. Antriebsvorrichtung nach einem der Ansprüche 1 bis 14, bei der die Wechselrichter (14,15,16,17,18,19,20) mittels eines gemeinsamen Steuerbusses (29) an die Steuer- und Regelvorrichtung (23) der Antriebsvorrichtung (1) angeschlossen sind.

16. Antriebsvorrichtung nach einem der Ansprüche 1 bis 15, bei der die Zwischenkreisspannung der Gleichspannungsschiene (13) in einem zulässigen Arbeitsbereich zwischen 460 und 750 V variabel ist.

## Claims

1. Drive apparatus for a fuel/electrically driven vehicle, comprising an internal combustion engine (10), a generator (11) which can be driven by means of the internal combustion engine (10), a rectifier (12) to which the output voltage from the generator (11) can be emitted, a DC voltage rail (13) which can be fed with an intermediate-circuit voltage by the rectifier (12), and an open-loop and closed-loop control apparatus (23) by means of which vehicle functions can be subjected to open-loop and closed-loop control, with the open-loop and closed-loop control apparatus (23) having a rotational-speed control unit (24) with a rotational-speed sensor (30), by means of which the rotational speed of the internal combustion engine (10) can be controlled in accordance with the power requirement, **characterized in that** a plurality of inverters (14, 15, 16, 17, 18, 19, 20) are connected to the DC voltage rail (13) and a consumer motor (2, 3, 4, 5, 6, 7, 8) which can be operated in a rotational speed-controlled and/or torque-controlled manner can in each case be fed by means of the said inverters, and **in that** the open-loop and closed-loop control apparatus (23) has an output-voltage control unit (25) by means of which the excitation of the generator (11) can be controlled such that the intermediate-circuit voltage across the DC voltage rail (13) can be held in a prescribable permissible range.

2. Drive apparatus according to Claim 1, in which the inverters fed by the common DC voltage rail (13) are in the form of pulse-controlled inverters (14, 15, 16, 17, 18, 19, 20).

3. Drive apparatus according to Claim 1 or 2, in which a time-delay element (31) is arranged between the internal combustion engine (10) and the rotational-speed control unit (24) of the open-loop and closed-loop control apparatus (23), by means of which time-delay element a reduction in the rotational speed of the internal combustion engine (10) can be delayed by a prescribable time period in the event of a drop in demanded load.

4. Drive apparatus according to one of Claims 1 to 3, in which the rotational-speed control unit (24) of the open-loop and closed-loop control apparatus (23) is formed such that the rotational speed of the internal combustion engine (10) can be reduced to its idling speed at low load.

5. Drive apparatus according to one of Claims 1 to 4, in which the internal combustion engine is in the form of a diesel engine (10).

6. Drive apparatus according to one of Claims 1 to 5, in which the generator is in the form of a synchronous generator (11).

7. Drive apparatus according to one of Claims 1 to 6, in which the generator is in the form of a three-phase synchronous generator (11).

8. Drive apparatus according to one of Claims 1 to 7, in which a brake unit (21) with resistors (22) connected to it is connected to the DC voltage rail (13).

9. Drive apparatus according to one of Claims 1 to 8, in which four consumer motors are in the form of chassis motors (4, 5, 6, 7) of a chassis and two consumer motors are in the form of lifting-mechanism motors (2, 3) of a lifting mechanism of the fuel/electrically driven vehicle which is in the form of a container transportation vehicle.

10. Drive apparatus according to one of Claims 1 to 9, in which the open-loop and closed-loop control apparatus (23) is connected to power-requiring elements (27, 28) at the consumer-motor end.

11. Drive apparatus according to Claim 10, in which a power-requiring element at the consumer-motor end is in the form of an accelerator-pedal sensor (27) of the chassis motors (4, 5, 6, 7).

12. Drive apparatus according to Claim 10 or 11, in which a power-requiring element at the consumer-motor end is in the form of a lifting-mechanism master switch (28) of the lifting-mechanism motors (2, 3).

13. Drive apparatus according to one of Claims 9 to 12, in which the open-loop and closed-loop control apparatus (23) is connected to load-measuring cells (26) by means of which the weight of a load placed on the lifting mechanism can be detected.

14. Drive apparatus according to one of Claims 1 to 13, in which a consumer motor is in the form of an auxiliary motor (8) and can be fed by its associated inverter (20) via a harmonic filter (9).

15. Drive apparatus according to one of Claims 1 to 14, in which the inverters (14, 15, 16, 17, 18, 19, 20) are connected to the open-loop and closed-loop control apparatus (23) of the drive apparatus (1) by means of a common control bus (29).

16. Drive apparatus according to one of Claims 1 to 15, in which the intermediate-circuit voltage of the DC voltage rail (13) can be varied in a permissible operating range between 460 and 750 V.

## Revendications

1. Dispositif d'entraînement pour un véhicule à entraînement combiné par carburant et voie électrique, comprenant un moteur à combustion interne (10), un générateur (11), qui peut être entraîné par le moteur à combustion interne (10), un redresseur (12) auquel peut être délivrée la tension de sortie du générateur (11), une barre omnibus de tension continue (13), qui peut être alimentée par le redresseur (12) en une tension de circuit intermédiaire, et un dispositif de commande et de régulation (23) au moyen duquel des fonctions du véhicule peuvent être commandées et régulées, le dispositif de commande et de régulation (23) comprenant une unité de régulation de vitesse de rotation (24) ayant un capteur de mesure de vitesse de rotation (30), unité au moyen de laquelle il est possible de réguler la vitesse de rotation du moteur à combustion interne (10) conformément à la puissance demandée, **caractérisé en ce qu'**à la barre omnibus de tension continue (13) sont raccordés plusieurs onduleurs (14, 15, 16, 17, 18, 19, 20) au moyen desquels il est possible d'alimenter respectivement un moteur récepteur (2, 3, 4, 5, 6, 7, 8) correspondant pouvant fonctionner par régulation de vitesse de rotation et/ou de couple, et **en ce que** le dispositif de commande et de régulation (23) présente une unité de régulation de la tension de sortie (25) au moyen de laquelle il est possible de réguler l'excitation du générateur (11) de façon telle que la tension de circuit intermédiaire sur la barre omnibus de tension continue (13) puisse être maintenue dans une plage admissible prédéfinie.

2. Dispositif d'entraînement selon la revendication 1, dans lequel les onduleurs alimentés par la barre omnibus de tension continue (13) commune, sont réalisés en tant qu'onduleurs pulsés (14, 15, 16, 17, 18, 19, 20).

3. Dispositif d'entraînement selon la revendication 1 ou 2, dans lequel entre le moteur à combustion interne (10) et l'unité de régulation de vitesse de rotation (24) du dispositif de commande et de régulation (23), est disposé un organe de retard (31) au moyen duquel un abaissement de la vitesse de rotation du moteur à combustion interne (10), dans le cas d'une chute de la charge demandée, peut être retardé dans le temps, d'une durée pouvant être prédéfinie.

4. Dispositif d'entraînement selon l'une des revendications 1 à 3, dans lequel l'unité de régulation de vitesse de rotation (24) du dispositif de commande et de régulation (23) est conçue pour que la vitesse de rotation du moteur à combustion interne (10) puisse être abaissée, en cas de faible charge, à sa vitesse de rotation de ralenti.

5. Dispositif d'entraînement selon l'une des revendications 1 à 4, dans lequel le moteur à combustion interne est réalisé en tant que moteur Diesel (10).

6. Dispositif d'entraînement selon l'une des revendications 1 à 5, dans lequel le générateur est réalisé sous forme de générateur synchrone (11).

7. Dispositif d'entraînement selon l'une des revendications 1 à 6, dans lequel le générateur est réalisé sous forme de générateur synchrone triphasé.

8. Dispositif d'entraînement selon l'une des revendications 1 à 7, dans lequel à la barre omnibus de tension continue (13) est connectée une unité de freinage (21) à laquelle sont raccordées des résistances (22).

9. Dispositif d'entraînement selon l'une des revendications 1 à 8, dans lequel quatre moteurs récepteurs sont réalisés en tant que moteurs de train de roulement (4, 5, 6, 7) d'un train de roulement, et deux moteurs récepteurs en tant que moteur de groupe de levage (2, 3) d'un groupe de levage du véhicule à entraînement combiné par carburant et voie électrique, réalisé en tant que véhicule de transport de conteneurs.

10. Dispositif d'entraînement selon l'une des revendications 1 à 9, dans lequel le dispositif de commande et de régulation (23) est raccordé à des éléments de demande de puissance (27, 28) côté moteurs récepteurs.

11. Dispositif d'entraînement selon la revendication 10, dans lequel un élément de demande de puissance côté moteur récepteur, est réalisé en tant que détecteur de pédale d'accélérateur (27) des moteurs de train de roulement (4, 5, 6, 7) .

12. Dispositif d'entraînement selon la revendication 10 ou 11, dans lequel un élément de demande de puissance côté moteur récepteur, est réalisé en tant que commutateur maître de groupe de levage (28) des moteurs de groupe de levage (2, 3).

13. Dispositif d'entraînement selon l'une des revendications 9 à 12, dans lequel le dispositif de commande et de régulation (23), est raccordé à des cellules de mesure de charge (26), au moyen desquelles il est possible de relever le poids d'un chargement reçu sur le groupe de levage.

14. Dispositif d'entraînement selon l'une des revendications 1 à 13, dans lequel un moteur récepteur est réalisé en tant que moteur de fonctionnement auxiliaire (8) et peut être alimenté par l'intermédiaire d'un filtre sinusoïdal (9), à partir de l'onduleur (20) qui lui est associé.

15. Dispositif d'entraînement selon l'une des revendications 1 à 14, dans lequel les onduleurs (14, 15, 16, 17, 18, 19, 20) sont raccordés, au moyen d'un bus de commande (29) commun, au dispositif de commande et de régulation (23) du dispositif d'entraînement (1).

16. Dispositif d'entraînement selon l'une des revendications 1 à 15, dans lequel la tension de circuit intermédiaire de la barre omnibus de tension continue (13) est variable dans une plage de travail admissible, comprise entre 460 et 750 V.
